(19)

Europäisches
Patentamt
European
Patent Office
Office européen
des brevets

(11)  **EP 4 361 886 A1**

(12)  # EUROPEAN PATENT APPLICATION

(43) Date of publication:
   **01.05.2024   Bulletin 2024/18**

(21) Application number: **23194084.2**

(22) Date of filing: **29.08.2023**

(51) International Patent Classification (IPC):
   ***G06N 3/044*** (2023.01)      ***G06N 3/049*** (2023.01)
   ***G06N 3/065*** (2023.01)      ***G06F 7/00*** (2006.01)

(52) Cooperative Patent Classification (CPC):
   **G06N 3/065; G06N 3/044; G06N 3/049;**
   G06F 7/5443

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority:   **31.10.2022   JP 2022174849**

(71) Applicant: **KABUSHIKI KAISHA TOSHIBA**
   **Minato-ku**
   **Tokyo 105-0023 (JP)**

(72) Inventors:
   • **MARUKAME, Takao**
     **Tokyo (JP)**
   • **NOMURA, Kumiko**
     **Tokyo (JP)**
   • **MIZUSHIMA, Koichi**
     **Tokyo (JP)**
   • **NISHI, Yoshifumi**
     **Tokyo (JP)**

(74) Representative: **Marks & Clerk LLP**
   **15 Fetter Lane**
   **London EC4A 1BW (GB)**

(54)   **RESERVOIR CALCULATION DEVICE AND ADJUSTMENT METHOD**

(57)   A reservoir calculation device (10) includes a reservoir circuit (14) and an output circuit (16). The reservoir circuit receives input data and outputs intermediate signals, each undergoing a transient change when the input data changes. The output circuit outputs an output signal obtained by combining the intermediate signals. The reservoir circuit includes intermediate circuits (20-1, ..., 20-N), each including a neuron circuit (22) and an intermediate output circuit (24). The neuron circuit generates an intermediate voltage undergoing a transient change corresponding to weight data and the input data when the input data changes. The intermediate output circuit outputs an intermediate signal representing a level of the intermediate voltage from the neuron circuit. The neuron circuit includes a time constant circuit (30) capable of changing a time constant. The time constant circuit is connected between a reference potential and an intermediate terminal (26) outputting the intermediate voltage.

FIG.2

EP 4 361 886 A1

**Description**

FIELD

Embodiments described herein relate generally to a reservoir calculation device and an adjustment method.

BACKGROUND

Artificial intelligence (AI) has been used in automation processing and laborsaving processing in various ways. A neural network is known as a typical AI algorithm.

A deep neural network (DNN) obtained by multi-layering the neural network is used for a deep learning algorithm. A recurrent neural network (RNN), in which recurrent connection from neurons closer to an output toward neurons closer to an input is carried out, is also used for time-series data processing.

A long-short-term memory (LSTM) is known as a neural network with enhanced short-term and long-term memory representation capabilities. The LSTM is even more applicable to time-series data processing.

In the RNN and the LSTM used for the time-series data processing, a calculation is carried out by using a central processing unit (CPU) being a general-purpose arithmetic calculator.

However, since the RNN and the LSTM require a more operation amount as compared with NN and DNN, the RNN and the LSTM are often operated on a general purpose graphical processing unit (GP-GPU). The operation amount in the RNN and the LSTM even more increases during training. Therefore, in the RNN and the LSTM, the training time has become long, and a large amount of power has been consumed during training. Therefore, elaborate parameter tuning is required for the deep learning, the RNN, and the LSTM during training to achieve high performance.

By contrast, reservoir computing is known as an algorithm for time-series data processing, which requires less operation amount during training. Reservoir computing is provided with an input unit, a reservoir unit, and an output unit. The reservoir computing may not train the reservoir unit. However, the reservoir computing is required to enhance a degree of accuracy in the weights between the reservoir unit and the output unit in order to output a desired signal.

The reservoir unit is implemented by hardware with various implementation such as electronic circuits. The signal output from the reservoir unit is generally an analog signal. The reservoir computing enables the operation of the weights between the reservoir unit and the output unit by a multiply accumulator using an analog circuit.

In order to achieve high performance, the reservoir unit, which is implemented by hardware, needed to minimize the reduction of accuracy due to data conversion between the input unit and the output unit as much as possible. In order to achieve high performance, the reservoir unit, which is implemented by hardware, needed to ensure consistency between the change speed of feature information included in the input signal to be processed and the response characteristics of the reservoir unit.

BRIEF DESCRIPTION OF THE DRAWINGS

FIG. 1 is a diagram illustrating a reservoir calculation device;
FIG. 2 is a configuration diagram of the reservoir calculation device;
FIG. 3 is a configuration diagram of an intermediate circuit;
FIG. 4 is a configuration diagram of a neuron circuit;
FIG. 5 is a configuration diagram of an analog multiply accumulate circuit;
FIG. 6 is an explanatory diagram of an arithmetic operation when $w_i = +1$ and $x_i = +1$;
FIG. 7 is an explanatory diagram of an arithmetic operation when $w_i = +1$ and $x_i = -1$;
FIG. 8 is an explanatory diagram of an arithmetic operation when $w_i = -1$ and $x_i = +1$;
FIG. 9 is an explanatory diagram of an arithmetic operation when $w_i = -1$ and $x_i = -1$;
FIG. 10 is an explanatory diagram of an operation of an analog multiply accumulate circuit;
FIG. 11 is a configuration diagram of a cross switch;
FIG. 12 is a diagram illustrating a first configuration example of a positive time constant circuit;
FIG. 13 is a diagram illustrating a second configuration example of the positive time constant circuit; and
FIG. 14 is a flowchart illustrating an adjustment method of a time constant.

DETAILED DESCRIPTION

A reservoir calculation device according to an embodiment includes an input circuit, a reservoir circuit, and an output circuit. The input circuit is configured to acquire an input signal and output input data corresponding to a level of the input signal. The input data is provided to the reservoir circuit. The reservoir circuit is configured to output intermediate signals. Each of the intermediate signals undergoes a transient change when the input data changes. The output circuit is configured to output an output signal obtained by combining the intermediate signals. The reservoir circuit includes intermediate circuits. Each of the intermediate circuits includes a neuron circuit and an intermediate output circuit. Weight data is set for the neuron circuit. The neuron circuit is configured to acquire the input data and generate an intermediate voltage. The intermediate voltage undergoes a transient change corresponding to the weight data and the input data when the input data changes. The intermediate output circuit is configured to output, as one of the intermediate signals, an intermediate signal representing a level of the intermediate voltage output from the neuron circuit. The neuron circuit includes a time constant circuit capable of changing a time constant, the time constant circuit being connected between a reference potential and an intermediate terminal outputting the intermediate voltage.

Embodiments of the present disclosure will be described with reference to the drawings.

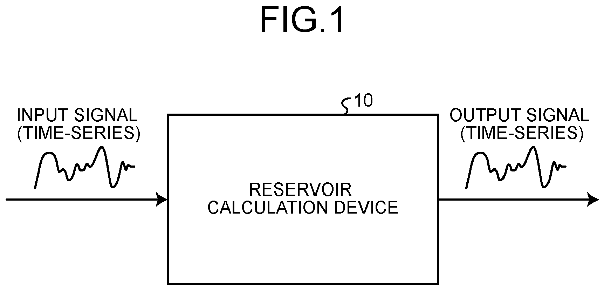

FIG. 1 is a diagram illustrating a reservoir calculation device 10. The reservoir calculation device 10 is a device that implements reservoir computing by hardware.

The reservoir calculation device 10 receives a time-series input signal x. The input signal x is a signal whose level changes in a time axis. The input signal x may be a voltage signal whose level is represented by an analog voltage, or may be a digital signal whose level is represented by a digital value.

The reservoir calculation device 10 outputs a time-series output signal y in response to the receipt of the input signal x. The time-series output signal y is a signal whose level changes in the time axis. The output signal y may be a voltage signal whose level is represented by an analog voltage, or may be a digital signal whose level is represented by a digital value.

The reservoir calculation device 10 has reproducibility that, when receiving the same time-series input signal x, the reservoir calculation device 10 performs the same operation and outputs the same time-series output signal y. In other words, the reservoir calculation device 10 performs a deterministic operation. Thus, the output signal y is nonlinear with respect to the input signal x, but is a signal in response to the input signal x. For example, the output signal y may be the same signal as the input signal x, or may be a signal inferred from the input signal x after a predetermined time has elapsed. In addition, the output signal y may be a signal representing abnormality in the input signal x at the present time or after a predetermined time has elapsed, may be a signal including a feature component extracted from the input signal x, or may be a signal representing a feature component in which noise or the like is removed from the input signal x.

Such a reservoir calculation device 10 can be incorporated into a detection system that is configured to acquire signals detected in equipment, a facility, a plant, etc. as the input signals x and detect abnormalities, events, etc. in the equipment, the facility, the plant, etc. on the basis of the output signal y. The reservoir calculation device 10 is not limited to such a detection system, but may be applied to other systems such as an information processing system and a control system.

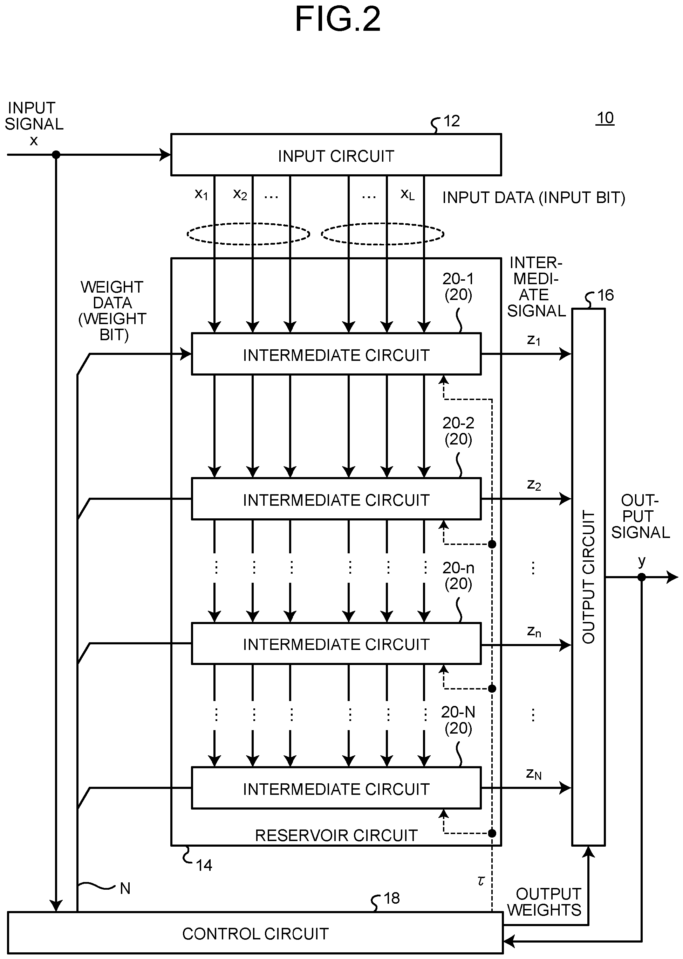

FIG. 2 is a diagram illustrating a configuration of the reservoir calculation device 10. The reservoir calculation device 10 is provided with an input circuit 12, a reservoir circuit 14, an output circuit 16, and a control circuit 18.

The input circuit 12 acquires an input signal x. The input circuit 12 acquires a digital input signal x at each sampling timing when the input signal x is a digital signal. When the input signal x is an analog signal, the input circuit 12 converts an analog input signal x to the digital input signal x by analog-to-digital conversion at each sampling timing. Moreover, the input circuit 12 performs predetermined preprocessing on the input signal x. For example, the input circuit 12 may calculate the difference between a reference signal representing a reference waveform and the input signal x as the preprocessing. The input circuit 12 may not perform the preprocessing.

The input circuit 12 then encodes a level of the input signal x at each sampling timing by a predetermined encoding scheme to generate input data including a plurality of input bits. Each of the input bits represents a binary value. In the present embodiment, each of the input bits represents +1 or -1. For example, the input circuit 12 generates input data including L input bits ($x_1$, $x_2$, ..., $x_L$), where L is two or more even numbers.

In the present embodiment, the input data is expressed by a thermometer code. More specifically, the input bits include a plurality of positive bits and a plurality of negative bits. For example, a group of bits ($x_1$, ..., $x_{L/2}$) of the upper half of the L input bits ($x_1$, $x_2$, ..., $x_L$) includes the positive bits. In addition, a group of bits ($x_{(L/2)+1}$, ..., $x_L$) of the lower half of the L input bits ($x_1$, $x_2$, ..., $x_L$) includes the negative bits.

When the level of the input signal x is positive, the positive bits express an absolute value of the level of the input signal x by the number of first values. Each first value is either one of the binary values. When the level of the input signal x is positive, each of the negative bits is a second value different from the first value out of the binary values. When the level of the input signal x is negative (a value of 0 or less), the negative bits represent an absolute value of the level of the input signal x by the number of first values. When the level of the input signal x is negative, each of the positive bits is a second value.

In the present embodiment, when the level of the input signal x is positive, the positive bits represent the absolute value of the level of the input signal x by the number of +1. When the level of the input signal x is positive, each of the negative bits is -1. The negative bits represent, when the level of the input signal x is negative, the absolute value of the level of the input signal x by the number of +1. When the level of the input signal x is negative, each of the positive bits is -1.

The input circuit 12 provides input data to the reservoir circuit 14 at each sampling timing. The input circuit 12 may be incorporated into the control circuit 18 and implemented by digital processing. In this case, the control circuit 18 acquires the input signal x at each sampling timing, performs analog-to-digital conversion, and generates input data by digital processing. The control circuit 18 then provides the input data to the reservoir circuit 14 via an interface or other means at each sampling timing.

The reservoir circuit 14 includes a plurality of intermediate circuits 20. Each of the intermediate circuits 20 has the same circuit configuration. For example, the reservoir circuit 14 includes N (N is an integer of 2 or more) intermediate circuits 20-1 to 20-N.

Each of the intermediate circuits 20 acquires weight data from the control circuit 18 and stores the weight data therein prior to an arithmetic operation by the reservoir calculation device 10. Each of the intermediate circuits 20 acquires and stores different weight data from each other.

Each of the intermediate circuits 20 acquires input data at each sampling timing. The intermediate circuits 20 acquire the same input data as each other.

Each of the intermediate circuits 20 performs analog arithmetic processing on the input data and the stored weight data by an analog circuit, and outputs an analog intermediate signal z. The intermediate signal z is a signal representing continuous values. For example, the intermediate signal z is a voltage signal. For example, the reservoir circuit 14 causes N intermediate circuits 20-1 to 20-N to output N intermediate signals zi to $z_N$.

The intermediate signal z output from each of the intermediate circuits 20 converges to a level determined by the result of the analog operation on the input data and the weight data after a sufficiently long time has elapsed since the input data changed. However, the level of the intermediate signal z undergoes a transient change in the time before level convergence after input data changed. Each of the intermediate circuits 20 stores therein weight data different from each other. Thus, even upon receiving the same input data, the intermediate circuits 20 output intermediate signals z that undergo transient changes different from each other. Moreover, each of the intermediate circuits 20 outputs an intermediate signal z that undergoes the same transient change when the change in the input data is the same. In other words, each of the intermediate circuits 20 performs a deterministic operation. The transient waveform of each of the intermediate signals z represents a piece of feature information included in the input signal x.

The reservoir circuit 14 provides the intermediate signals z generated by the intermediate circuits 20 to the output circuit 16.

The output circuit 16 acquires the intermediate signals z from the reservoir circuit 14. For example, the output circuit 16 acquires N intermediate signals zi to $z_N$ from the reservoir circuit 14.

Moreover, output weights are set for the output circuit 16 by the control circuit 18 prior to the arithmetic operation by the reservoir calculation device 10. Each of the output weights is represented by a continuous value or a digital value with a predetermined bit width. Each of the output weights may be represented by a binary value. The output weights have a one-to-one correspondence with the intermediate signals z. For example, N output weights are set for the output circuit 16.

The output circuit 16 then outputs the output signal y obtained by multiplying and accumulating the intermediate signals z and the output weights. For example, the output circuit 16 multiplies each of the N intermediate signals zi to $z_N$ by a corresponding output weight of the N output weights. The output circuit 16 then generates the output signal y by adding the N intermediate signals zi to $z_N$ after multiplication of the corresponding output weight.

The output circuit 16 may multiply and accumulate N intermediate signals zi to $z_N$ represented by voltage signals and N output weights by the analog circuit to generate an output signal y serving as a voltage signal. Moreover, the output circuit 16 may analog-to-digital convert the output signal y serving as a voltage signal to generate an output signal y serving as a digital signal.

The output circuit 16 may also perform analog-to-digital conversion on each of the intermediate signals z. The output circuit 16 may then multiply and accumulate the intermediate signals z serving as digital signals and the output weights by a digital signal processor to generate an output signal y serving as a digital signal. The output circuit 16 may also acquire the N intermediate signals zi to $z_N$ represented by digital signals. In this case, the output circuit 16 may multiply and accumulate N intermediate signals $z_1$ to $z_N$ represented by digital signals and N output weights by a digital circuit to generate an output signal y serving as a digital signal. The output circuit 16 may acquire N intermediate signals zi to $z_N$ represented by current signals and multiply and accumulate the N intermediate signals $z_1$ to $z_N$ by the analog circuit to generate an output signal y.

The output circuit 16 outputs an output signal y to the outside. Moreover, the output circuit 16 provides the output signal y to the control circuit 18.

The control circuit 18 includes a micro processing unit (MPU), a central processing processor (CPU), or other processing units, a random-access memory (RAM), a non-volatile memory, etc. The control circuit 18 operates in accordance with a computer program stored in, for example, the non-volatile memory.

Prior to the arithmetic operation by the reservoir calculation device 10, the control circuit 18 provides weight data to each of the intermediate circuits 20 included in the reservoir circuit 14 and causes those circuits 20 to store the weight data. For example, the control circuit 18 may store predetermined weight data in each of the intermediate circuits 20, or may store randomly determined weight data therein.

The control circuit 18 performs training processing prior to the arithmetic operation by the reservoir calculation device 10 and sets output weights for the output circuit 16. In the training processing, the control circuit 18 adjusts the output weights such that, for example, the desired output signal y is output when a pre-prepared instruction signal is provided as an input signal x to the input circuit 12.

Moreover, after the training processing, the control circuit 18 sets a time constant set value $\tau$ for each of the intermediate circuits 20 before the arithmetic operation by the reservoir calculation device 10. For example, the control circuit 18 acquires the input signal x, which is acquired under the environment where the reservoir calculation device 10 is actually applied, and the output signal y that the reservoir calculation device 10 has output when receiving the input signal x, and the control circuit 18 sets the time constant set value $\tau$ on the basis of the acquired input signal x and output signal y.

The time constant set value $\tau$ is a parameter for adjusting a transient change time in an intermediate signal z output from each of the intermediate circuits 20. In other words, the time constant set value $\tau$ is a parameter for adjusting the response speed of each of the intermediate circuits 20. By change in the time constant set value $\tau$, each of the intermediate circuits 20 changes a transient change time from when the input data changes until the level converges, in the intermediate signal z. For example, each of the intermediate circuits 20 can set a longer transient change time as a larger time constant set value $\tau$ is set, for example.

The transient waveform of the intermediate signal z cannot properly include the feature information of the input signal x when the transient change time of the intermediate signal z is too long as well as too short with respect to the time when the feature information included in the input signal x changes. For example, in a case where the transient change time of the intermediate signal z is about 10 microseconds although the feature information included in the input signal x changes every 10 nanoseconds, the transient change speed of the intermediate signal z is too slow. In this case, the feature information included in the input signal x is thus not properly represented in the transient response waveform of the intermediate signal z. Conversely, for example, in a case where the transient change time of the intermediate signal z is about 10 nanoseconds although the feature information included in the input signal x changes every 10 microseconds, the transient change speed of the intermediate signal z is too fast. In this case, the feature information included in the input signal x is thus not properly represented in the transient response waveform of the intermediate signal z. Therefore, the control circuit 18 appropriately adjusts the time constant set value $\tau$ prior to the arithmetic operation by the reservoir calculation device 10 such that the feature information included in the input signal x is appropriately represented in the transient waveform of the intermediate signal z. Accordingly, the control circuit 18 causes the output circuit 16 to output the output signal y that appropriately represents the feature information included in the input signal x.

As the number of the intermediate circuits 20 included in the reservoir calculation device 10 is larger, the reservoir calculation device 10 can more enhance the ability of representation to represent the feature information included in the input signal x. The individual intermediate circuits 20 are of the same configuration and circuits that acquire the same input data. Therefore, even though the reservoir calculation device 10 increases the number of the intermediate circuits 20 to enhance its ability of representation, the intermediate circuits 20 can be commonly used and the wiring of input data can be commonly used, resulting in a decrease in the design cost. Therefore, the reservoir calculation device 10 can achieve the appropriate ability of representation corresponding to a system or the like to be applied at a small design cost.

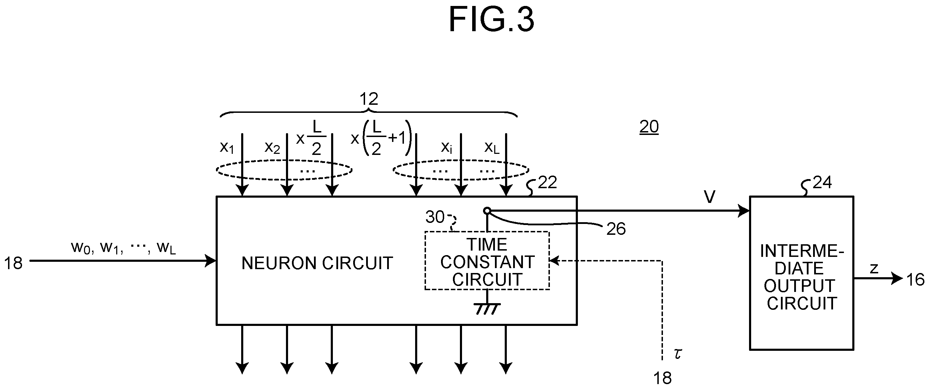

FIG. 3 is a diagram illustrating a configuration of one intermediate circuit 20 of the intermediate circuits 20. The intermediate circuit 20 includes a neuron circuit 22 and an intermediate output circuit 24.

The neuron circuit 22 acquires input data at each sampling timing. The neuron circuit 22 acquires and internally stores single weight data included in the weight data from the control circuit 18 prior to the arithmetic operation by the reservoir calculation device 10.

The weight data set for the neuron circuit 22 includes a plurality of weight bits. Each of the weight bits represents a binary value. In the present embodiment, each of the weight bits represents +1 or -1.

For example, the weight data includes (L+1) weight bits ($w_0$, $w_1$, $w_2$, ..., $w_L$). The L weight bits ($w_1$, ..., $w_L$) of the (L + 1) weight bits have a one-to-one correspondence with the L input bits ($x_1$, ..., $x_L$).

The neuron circuit 22 performs the analog arithmetic processing with the input data and the stored weight data by the analog circuit to generate an analog intermediate voltage V. The neuron circuit 22 generates the intermediate voltage V that undergoes a transient change corresponding to the set weight data and input data when the input data changes. The neuron circuit 22 provides the generated intermediate voltage V to the intermediate output circuit 24.

Moreover, the neuron circuit 22 includes a time constant circuit 30 capable of changing a time constant. The time constant circuit 30 is connected between an intermediate terminal 26 that outputs the intermediate voltage V, and a reference potential, such as ground potential, for example. The time constant circuit 30 changes the time constant in accordance with the time constant set value $\tau$ provided by the control circuit 18. Accordingly, the time constant circuit 30 can change the transient change time of the intermediate voltage V output from the intermediate terminal 26.

The intermediate output circuit 24 acquires the intermediate voltage V from the neuron circuit 22. The intermediate output circuit 24 outputs an intermediate signal z that represents the level of the intermediate voltage V output from the neuron circuit 22 as one of the intermediate signals z provided to the output circuit 16.

The intermediate output circuit 24 may, for example, acquire an intermediate voltage V as a sample at a predetermined sampling timing in the middle of a transient change, hold the sampled voltage until the next sampling timing, and output the held voltage as an intermediate signal z. The intermediate output circuit 24 may, for example, analog-to-digital convert the sampled voltage and output an intermediate signal z represented by a digital signal. The intermediate output circuit 24 may output, for example, an intermediate signal z represented by a current signal corresponding to the sampled voltage.

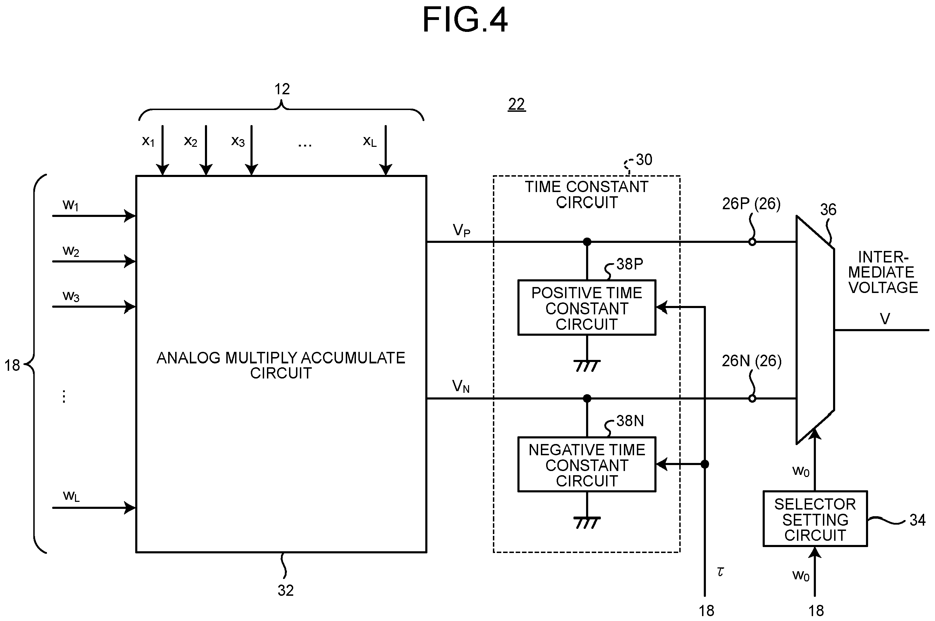

FIG. 4 is a diagram illustrating a configuration of the neuron circuit 22. The neuron circuit 22 generates a positive intermediate voltage $V_P$ and a negative intermediate voltage $V_N$, and outputs, as an intermediate voltage V, either the positive intermediate voltage $V_P$ or the negative intermediate voltage $V_N$.

For example, the neuron circuit 22 includes an analog multiply accumulate circuit 32, a selector setting circuit 34, a selector 36, and the time constant circuit 30.

The analog multiply accumulate circuit 32 acquires input data including a plurality of input bits from the input circuit 12 at each sampling timing. For example, the analog multiply accumulate circuit 32 acquires input data including L input bits ($x_1$, ..., $x_L$).

The analog multiply accumulate circuit 32 acquires and internally stores some of the weight bits included in the weight data from the control circuit 18 prior to the arithmetic operation by the reservoir calculation device 10. The weight bits acquired by the analog multiply accumulate circuit 32 have a one-to-one correspondence with the input bits. That is, each of the input bits corresponds to a different one of the weight bits in the weight data. For example, the analog multiply accumulate circuit 32 acquires and internally stores L weight bits ($w_1$, ..., $w_L$) corresponding to the L input bits ($x_1$, ..., $x_L$) included in the input data, out of the (L + 1) weight bits ($w_0$, $w_1$, $w_2$, ..., $w_L$) included in the weight data.

The analog multiply accumulate circuit 32 generates the positive intermediate voltage $V_P$ and the negative intermediate voltage $V_N$. When the input data changes, each of the positive intermediate voltage $V_P$ and the negative intermediate voltage $V_N$ undergoes a transient change corresponding to the weight data and the input data set for the analog multiply accumulate circuit 32.

The difference voltage between the positive intermediate voltage $V_P$ and the negative intermediate voltage $V_N$ after the transient change time has elapsed and the convergence has been completed is corresponding to a value obtained by multiplying and accumulating the acquired input bits and the acquired weight bits. For example, the difference voltage between the positive intermediate voltage $V_P$ and the negative intermediate voltage $V_N$ is a value corresponding to a value obtained by multiplying each of the L input bits ($x_1$ to $x_N$) by a weight bit corresponding to each of the L input bits ($x_1$ to $x_N$) out of the L weight bits ($w_1$, ..., $w_L$), and adding L input bits ($x_1$ to $x_N$) obtained after the corresponding weight bits has been multiplied. More specifically, the analog multiply accumulate circuit 32 generates the positive intermediate voltage $V_P$ and the negative intermediate voltage $V_N$ in the relationship represented by Equation (1).

$$V_P - V_N = A \sum_{i=1}^{L} x_i \cdot w_i \qquad \cdots (1)$$

In Equation (1), i represents an integer from 1 to L.

In Equation (1), A is a nonlinear value with respect to a value obtained by multiplying an input bit ($x_i$) by a weight bit ($w_i$). For example, A monotonically increases or monotonically decreases, but is a nonlinear value with respect to the value obtained by multiplying the input bit ($x_i$) by the weight bit ($w_i$). Since A is a nonlinear value, the analog multiply accumulate circuit 32 changes the change amount of the difference voltage between the positive intermediate voltage $V_P$ and the negative intermediate voltage $V_N$ with respect to the change amount of the L input bits ($x_1$ to $x_N$) corresponding to the L weight bits ($w_1$, ..., $w_L$) internally stored. Accordingly, the analog multiply accumulate circuit 32 can change the transient change in the difference voltage between the positive intermediate voltage $V_P$ and the negative intermediate voltage $V_N$ corresponding to the L weight bits ($w_1$, ..., $w_L$) internally stored. Therefore, the reservoir calculation device 10 can accurately represent the feature information included in the input signal x as a transient change of the output signal y.

The analog multiply accumulate circuit 32 supplies the positive intermediate voltage $V_P$ to a positive intermediate terminal 26P, which is the intermediate terminal 26 on the positive side. The analog multiply accumulate circuit 32 supplies the negative intermediate voltage $V_N$ to a negative intermediate terminal 26N, which is the intermediate terminal 26 on the negative side.

The selector setting circuit 34 acquires a weight bit from the control circuit 18 and stores the weight bit therein prior to the arithmetic operation by the reservoir calculation device 10. The weight bit stored by the selector setting circuit 34 is one of the weight bits included in the weight data. For example, the selector setting circuit 34 stores a weight bit ($w_0$) other than the L weight bits ($w_1$, ..., $w_L$) stored in the analog multiply accumulate circuit 32, out of the (L + 1) weight bits ($w_0$, $w_1$, $w_2$, ..., $w_L$) included in the weight data. The selector setting circuit 34 provides the stored weight bit to the selector 36.

The selector 36 selects and outputs either the positive intermediate voltage $V_P$ provided to the positive intermediate terminal 26P or the negative intermediate voltage $V_N$ provided to the negative intermediate terminal 26N in accordance with the weight bit stored in the selector setting circuit 34, as an intermediate voltage V. For example, when the weight bit ($w_0$) stored in the selector setting circuit 34 is +1, the selector 36 selects and outputs the positive intermediate voltage $V_P$ as the intermediate voltage V, and when the weight bit ($w_0$) stored in the

selector setting circuit 34 is -1, the selector 36 selects and outputs the negative intermediate voltage $V_N$ as the intermediate voltage V.

The time constant circuit 30 includes a positive time constant circuit 38P and a negative time constant circuit 38N.

The positive time constant circuit 38P is connected between the positive intermediate terminal 26P and the reference potential. The positive time constant circuit 38P can change a time constant. For example, a capacitance of the positive time constant circuit 38P can be changed.

The negative time constant circuit 38N is connected between the negative intermediate terminal 26N and the reference potential. The negative time constant circuit 38N can change a time constant. For example, the negative time constant circuit 38N can change a capacitance.

Each of the positive time constant circuit 38P and the negative time constant circuit 38N acquires a time constant set value $\tau$ from the control circuit 18. Each of the positive time constant circuit 38P and the negative time constant circuit 38N changes a time constant in accordance with the acquired time constant set value $\tau$. For example, each of the positive time constant circuit 38P and the negative time constant circuit 38N changes the magnitude of the capacitance in accordance with the acquired time constant set value $\tau$. Each of the positive time constant circuit 38P and the negative time constant circuit 38N may include a variable capacitor. Each of the positive time constant circuit 38P and the negative time constant circuit 38N may include an all-solid-state battery, which can change a capacitance.

These positive time constant circuit 38P and negative time constant circuit 38N can change a transient change time of each of the positive intermediate voltage $V_P$ and the negative intermediate voltage $V_N$ in accordance with the time constant set value $\tau$ set by the control circuit 18.

The neuron circuit 22 illustrated in FIG. 4 has a configuration that the analog multiply accumulate circuit 32 outputs both the positive intermediate voltage $V_P$ and the negative intermediate voltage $V_N$, but the analog multiply accumulate circuit 32 may be configured to output only one of the positive intermediate voltage $V_P$ and the negative intermediate voltage $V_N$. In this case, the neuron circuit 22 is configured without the selector setting circuit 34 and the selector 36. In this case, the time constant circuit 30 includes only one of the positive time constant circuit 38P and the negative time constant circuit 38N.

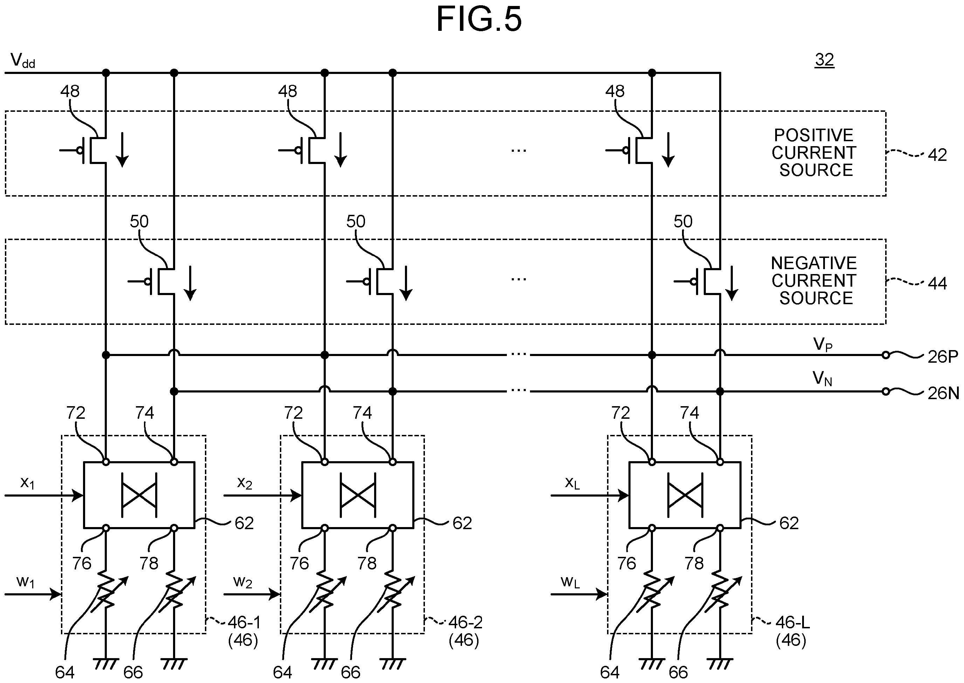

FIG. 5 is a diagram illustrating a configuration of the analog multiply accumulate circuit 32. The analog multiply accumulate circuit 32 includes a positive current source 42, a negative current source 44, and a plurality of arithmetic circuits 46.

The positive current source 42 is connected between a power supply potential (Vdd) and the positive intermediate terminal 26P. The positive current source 42 is a constant current source that provides a constant current in a direction where a current flows from the power supply potential (Vdd) to the positive intermediate terminal 26P.

For example, the positive current source 42 has L first FETs 48. The L first FETs 48 are field-effect transistors that have the same characteristics as each other. For example, the L first FETs 48 are pMOSFETs that have the same characteristics as each other.

Gates of the L first FETs 48 are commonly connected to a gate of a reference pMOSFET. The L first FETs 48 have sources connected to the power supply potential (Vdd) and drains connected to the positive intermediate terminal 26P. The reference pMOSFET is diode-connected and a constant current flows between the source and the drain by the current source. Accordingly, each of the L first FETs 48 allows the constant current to flow between the source and the drain because each of the L first FETs 48 is connected to the reference pMOSFET and a current mirror. The positive current source 42 may have a different number of first FETs 48 from the L first FETs.

The negative current source 44 is connected between the power supply potential (Vdd) and the negative intermediate terminal 26N. The negative current source 44 is a constant current source that provides the same constant current as that of the positive current source 42 in a direction where a current flows from the power supply potential (Vdd) to the negative intermediate terminal 26N.

For example, the negative current source 44 has L second FETs 50. The L second FETs 50 are field-effect transistors that have the same characteristics as each other. For example, the L second FETs 50 are pMOSFETs that have the same characteristics as each other.

Gates of the L second FETs 50 are commonly connected to a gate of a reference pMOSFET. The L second FETs 50 have sources connected to the power supply potential (Vdd) and drains connected to the negative intermediate terminal 26N. Accordingly, each of the L second FETs 50 allows the constant current to flow between the source and the drain because each of the L second FETs 50 is connected to the reference pMOSFET and a current mirror. The negative current source 44 may have a different number of the second FETs 50 from the L FETs as long as the same current as the positive current source 42 is capable of flowing.

The arithmetic circuits 46 have a one-to-one correspondence with the input bits included in the input data. For example, the analog multiply accumulate circuit 32 includes L arithmetic circuits 46-1 to 46-L. The L arithmetic circuits 46-1 to 46-L have a one-to-one correspondence with the L input bits ($x_1$, ..., $x_L$). Each of the arithmetic circuits 46 acquires a corresponding input bit of the input bits and a corresponding weight bit of the weight bits included in the weight data.

Each of the arithmetic circuits 46 is connected between the intermediate terminal 26 and the reference potential. Each of the arithmetic circuits 46 includes a resistor and a switch. By switching a switch, each of the arithmetic circuits 46 has a resistance value corresponding to a multiplication value obtained by multiplying the corresponding input bit of the input bits by the corresponding weight bit of the weight bits. Each of the arithmetic circuits 46 is then connected to the constant current source, and allows a current output from the constant current source to flow through the resistor.

In the present embodiment, each of the arithmetic circuits 46 includes a cross switch 62, which is an example of a switch, a positive resistor 64, which is a resistor on the positive side, and a negative resistor 66, which is a resistor on the negative side.

The cross switch 62 includes a positive input terminal 72, a negative input terminal 74, a positive output terminal 76, and a negative output terminal 78.

The cross switch 62 connects the positive output terminal 76 to one of the positive input terminal 72 and the negative input terminal 74. The cross switch 62 connects the negative output terminal 78 to the other of the positive input terminal 72 and the negative input terminal 74 to which the positive output terminal 76 is not connected. The cross switch 62 carries out switch operation to connect each of the positive output terminal 76 and the negative output terminal 78 to either the positive input terminal 72 or the negative input terminal 74 in accordance with the corresponding input bit.

The positive input terminal 72 of the cross switch 62 is connected to the positive intermediate terminal 26P. In other words, the positive input terminal 72 of the cross switch 62 is connected to a current outflow terminal of the positive current source 42. The negative input terminal 74 of the cross switch 62 is connected to the negative intermediate terminal 26N. That is, the negative input terminal 74 of the cross switch 62 is connected to a current outflow terminal of the negative current source 44.

One end of the positive resistor 64 is connected to the corresponding positive output terminal 76 of the cross switch 62, and the other end of the positive resistor 64 is connected to the reference potential. One end of the negative resistor 66 is connected to the corresponding negative output terminal 78 of the cross switch 62 and the other end of the negative resistor 66 is connected to the reference potential.

At least either one of the positive resistor 64 and the negative resistor 66 is a variable resistance. For example, at least either one of the positive resistor 64 and the negative resistor 66 is a resistance random access memory capable of changing a resistance value.

A difference value between resistance of the positive resistor 64 and resistance of the negative resistor 66 is inverted to be positive or negative in accordance with a corresponding weight bit. For example, prior to the arithmetic operation by the reservoir calculation device 10, the control circuit 18 sets a magnitude relation between resistance values of the positive resistor 64 and the negative resistor 66 in accordance with corresponding weight bits. Accordingly, each of the arithmetic circuits 46 can store the corresponding weight bit.

For example, when the corresponding weight bit is +1, the positive resistor 64 is set to have a first resistance value. When the corresponding weight bit is +1, the negative resistor 66 is set to have a second resistance value different from the first resistance value. When the corresponding weight bit is -1, the positive resistor 64 is set to have the second resistance value. When the corresponding weight bit is -1, the negative resistor 66 is set to have the first resistance value. Accordingly, a difference value between resistance of the positive resistor 64 and resistance of the negative resistor 66 can be inverted to be positive or negative in accordance with a corresponding weight bit.

The cross switch 62 switches to a straight connection state or a reverse connection state in accordance with a corresponding input bit. For example, the cross switch 62 is in the straight connection state when the corresponding input bit is +1, and in the reverse connection state when the corresponding input bit is -1. Alternatively, the cross switch 62 may be in the reverse connection state when the corresponding input bit is +1 and in the straight connection state when the corresponding input bit is -1.

In the straight connection state, the cross switch 62 connects the positive output terminal 76 to the positive input terminal 72 (positive intermediate terminal 26P) and connects the negative output terminal 78 to the negative input terminal 74 (negative intermediate terminal 26N). Thus, in the straight connection state, the cross switch 62 connects the positive resistor 64 between the reference potential and the positive intermediate terminal 26P and connects the negative resistor 66 between the reference potential and the negative intermediate terminal 26N. Moreover, in the straight connection state, the cross switch 62 allows a current output from the positive current source 42 to flow through the positive resistor 64 and allows a current output from the negative current source 44 to flow through the negative resistor 66.

In the reverse connection state, the cross switch 62 connects the positive output terminal 76 to the negative input terminal 74 (negative intermediate terminal 26N) and connects the negative output terminal 78 to the positive input terminal 72 (positive intermediate terminal 26P). Thus, in the reverse connection state, the cross switch 62 connects the positive resistor 64 between the reference potential and the negative intermediate terminal 26N and connects the negative resistor 66 between the reference potential and the positive intermediate terminal 26P. In the reverse connection state, the cross switch 62 allows a current output from the positive current source 42 to flow through the negative resistor 66 and allows a current output from the negative current source 44 to flow through the positive resistor 64.

In such an analog multiply accumulate circuit 32, the cross switch 62 included in each of the arithmetic circuits 46 is switched at each sampling timing in accordance with the input bits included in the input data. Accordingly, the analog multiply accumulate circuit 32 can switch the cross switch 62 included in each of the arithmetic circuits 46 when the input data changes.

By the switching of the cross switch 62 included in each of the arithmetic circuits 46, the analog multiply accumulate circuit 32 changes a combined resistance between the positive intermediate terminal 26P and the reference potential at each sampling timing. A constant current flows from the positive current source 42 to the combined resistance between the positive intermediate terminal 26P and the reference potential. Thus, the analog multiply accumulate circuit 32 can output, from the positive intermediate terminal 26P, the positive intermediate voltage $V_P$ that undergoes a transient change corresponding to the set weight data and input data when the input data changes.

Additionally, by the switching of the cross switch 62 included in each of the arithmetic circuits 46, the analog multiply accumulate circuit 32 changes the combined resistance between the negative intermediate terminal 26N and the reference potential at each sampling timing. A constant current flows from the negative current source 44 to the combined resistance between the negative intermediate terminal 26N and the reference potential. Thus, the analog multiply accumulate circuit 32 can output, from the negative intermediate terminal 26N, the negative intermediate voltage $V_N$ that undergoes a transient change corresponding to the set weight data and input data when the input data changes.

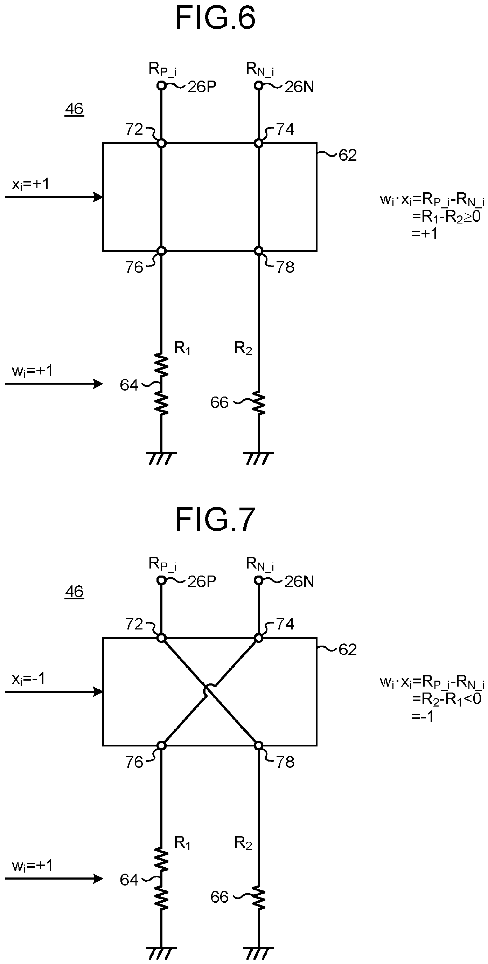

FIG. 6 is a diagram explaining the arithmetic operation of the i-th arithmetic circuit 46 when $w_i = +1$ and $x_i = +1$. When an i-th weight bit ($w_i$) is +1, the positive resistor 64 is set to have a first resistance value ($Ri$). When the i-th weight bit ($w_i$) is +1, the negative resistor 66 is set to have a second resistance value ($R_2$). Note that, $Ri > R_2$ is satisfied.

When an i-th input bit ($x_i$) is +1, the cross switch 62 is set for the straight connection state. Therefore, the positive current source 42 supplies a current to the positive resistor 64. The negative current source 44 also supplies a current to the negative resistor 66.

The arithmetic circuit 46 represents the calculation result of a value ($w_i \cdot x_i$) obtained by multiplying the i-th weight bit ($w_i$) by the i-th input bit ($x_i$) as a resistance difference ($R_{P\_i} - R_{N\_i}$) between a resistance value ($R_{P\_i}$) as seen from the positive intermediate terminal 26P and a resistance value ($R_{N\_i}$) as seen from the negative intermediate terminal 26N.

Therefore, in the example in FIG. 6, $R_{P\_i} = R_1$, and $R_{N\_i} = R_2$, and the resistance difference ($R_{P\_i} - R_{N\_i}$) is a positive value. Thus, when $w_i = +1$ and $x_i = +1$, the arithmetic circuit 46 can derive +1 as the value ($w_i \cdot x_i$), which is obtained by multiplying the i-th weight bit ($w_i$) by the i-th input bit ($x_i$).

FIG. 7 is a diagram for explaining an arithmetic operation of the i-th arithmetic circuit 46 when $w_i = +1$ and $x_i = -1$. When the i-th weight bit ($w_i$) is +1, the positive resistor 64 is set to have the first resistance value ($Ri$). When the i-th weight bit ($w_i$) is +1, the negative resistor 66 is set to have the second resistance value ($R_2$).

When the i-th input bit ($x_i$) is -1, the cross switch 62 is set for the reverse connection state. Therefore, the positive current source 42 supplies a current to the negative resistor 66. The negative current source 44 also supplies a current to the positive resistor 64.

Therefore, in the example in FIG. 7, $R_{P\_i} = R_2$, and $R_{N\_i} = R_1$, and the resistance difference ($R_{P\_i} - R_{N\_i}$) is a negative value. Thus, when $w_i = +1$ and $x_i = -1$, the arithmetic circuit 46 can derive -1 as the value ($w_i \cdot x_i$), which is obtained by multiplying the i-th weight bit ($w_i$) by the i-th input bit ($x_i$).

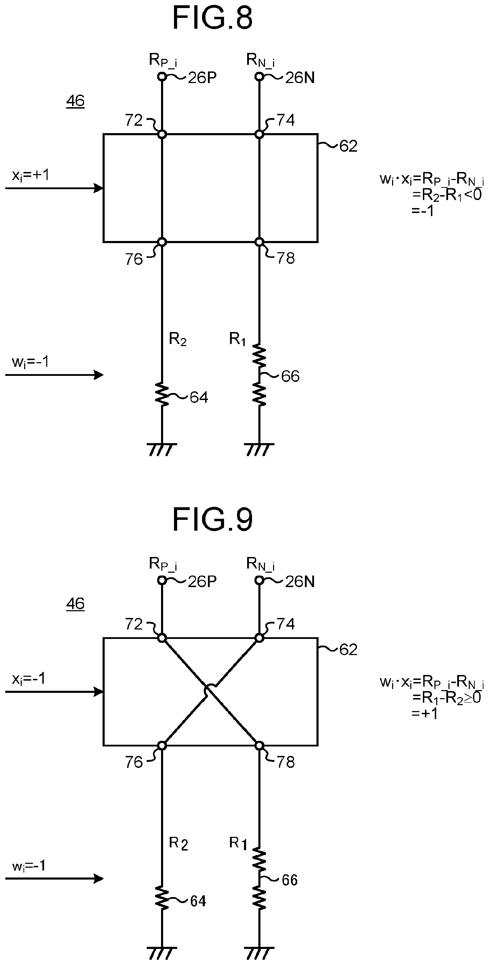

FIG. 8 is a diagram for explaining an arithmetic operation of the i-th arithmetic circuit 46 when $w_i = -1$ and $x_i = +1$. When the i-th weight bit ($w_i$) is -1, the positive resistor 64 is set to have the second resistance value ($R_2$). When the i-th weight bit ($w_i$) is -1, the negative resistor 66 is set to have the first resistance value ($Ri$).

When an i-th input bit ($x_i$) is +1, the cross switch 62 is set for the straight connection state. Therefore, the positive current source 42 supplies a current to the positive resistor 64. The negative current source 44 also supplies a current to the negative resistor 66.

Therefore, in the example in FIG. 8, $R_{P\_i} = R_2$, and $R_{N\_i} = R_1$, and the resistance difference ($R_{P\_i} - R_{N\_i}$) is a negative value. Thus, when $w_i = -1$ and $x_i = +1$, the arithmetic circuit 46 can derive -1 as the value ($w_i \cdot x_i$), which is obtained by multiplying the i-th weight bit ($w_i$) by the i-th input bit ($x_i$).

FIG. 9 is a diagram for explaining an arithmetic operation of the i-th arithmetic circuit 46 when $w_i = -1$ and $x_i = -1$. When the i-th weight bit ($w_i$) is -1, the positive resistor 64 is set to have the second resistance value ($R_2$). When the i-th weight bit ($w_i$) is -1, the negative resistor 66 is set to have the first resistance value ($Ri$).

When the i-th input bit ($x_i$) is -1, the cross switch 62 is set for the reverse connection state. Therefore, the positive current source 42 supplies a current to the negative resistor 66. The negative current source 44 also supplies a current to the positive resistor 64.

Therefore, in the example in FIG. 9, $R_{P\_i} = R_1$, and $R_{N\_i} = R_2$, and the resistance difference ($R_{P\_i} - R_{N\_i}$) is a positive value. Thus, when $w_i = -1$ and $x_i = -1$, the arithmetic circuit 46 can derive +1 as the value ($w_i \cdot x_i$), which is obtained by multiplying the i-th weight bit ($w_i$) by the i-th input bit ($x_i$).

As described above, the difference ($R_{P\_i} - R_{N\_i}$) between the resistance value ($R_{P\_i}$) as seen from the positive intermediate terminal 26P and the resistance value ($R_{N\_i}$) as seen from the negative intermediate terminal 26N represents the value ($w_i \cdot x_i$), which is obtained by multiplying the i-th weight bit ($w_i$) by the i-th input bit ($x_i$). Therefore, a difference value {$R_P - R_N$} between a combined resistance value $R_P$ of the resistances connected to the positive intermediate terminal 26P of the positive current source 42 and a combined resistance value $R_N$ of the resistances connected to the negative intermediate terminal 26N of the negative current source 44 represents the result of the multiply accumulate operation (multiplication and accumulation) between L input bits and L weight bits.

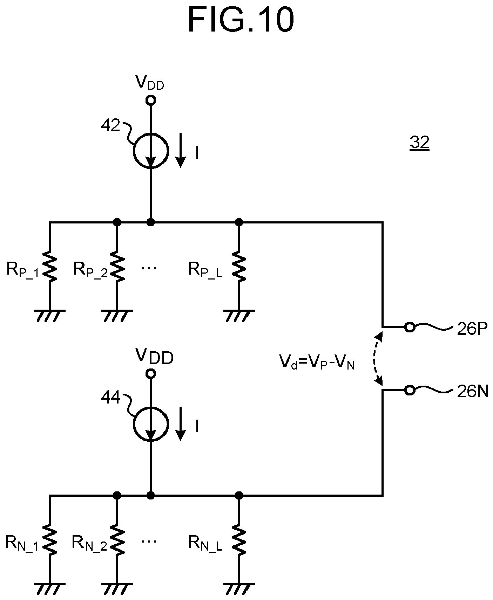

FIG. 10 is a diagram for explaining an operation of the analog multiply accumulate circuit 32.

The positive current source 42 outputs a current to the first arithmetic circuit 46-1 of $R_{P\_1}$. The positive current source 42 outputs a current to the second arithmetic circuit 46-2 of $R_{P\_2}$. The positive current source 42 then outputs a current to the L-th arithmetic circuit 46-L of $R_{P\_L}$. In other words, the positive current source 42 outputs a current (I) having a predetermined value to a resistance having a combined resistance value $R_P = 1/\{(1/R_{P\_1}) + (1/R_{P\_2}) + ... + (1/R_{P\_L})\}$. Accordingly, after a transient response time has elapsed, a positive intermediate voltage $V_P$, which is obtained by multiplying the current (I) having a predetermined value by the combined resistance value $R_P$, is generated at the positive intermediate terminal 26P.

The negative current source 44 outputs a current to the first arithmetic circuit 46-1 of $R_{N\_1}$. The negative current source 44 outputs a current to the second arithmetic circuit 46-2 of $R_{N\_2}$. The negative current source 44 then outputs a current to the L-th arithmetic circuit 46-L of $R_{N\_L}$. Thus, the negative current source 44 outputs a current (I) having a predetermined value to a resistance having a combined resistance value $R_N = 1/\{(1/R_{N\_1}) + (1/R_{N\_2}) + ... + (1/R_{N\_L})\}$ from the negative intermediate terminal 26N. Accordingly, after a transient response time has elapsed, a negative intermediate voltage $V_N$, which is obtained by multiplying the current (I) having a predetermined value by the combined resistance value $R_N$, is generated at the negative intermediate terminal 26N.

A difference value $\{R_P - R_N\}$ between a combined resistance value $R_P$ of the resistances connected to the positive intermediate terminal 26P of the positive current source 42 and a combined resistance value $R_N$ of the resistances connected to the negative intermediate terminal 26N of the negative current source 44 represents a value corresponding to the result of multiplying and accumulating (multiplication and accumulation) L input bits and L weight bits. The difference (Vd) between the positive intermediate voltage $V_P$ and the negative intermediate voltage $V_N$ is proportional to the difference between $R_P$ and $R_N$. Accordingly, after a transient response time has elapsed, the analog multiply accumulate circuit 32 can generate the positive intermediate voltage $V_P$ and the negative intermediate voltage $V_N$, which are values corresponding to the difference values representing the result of multiplying and accumulating (multiplication and accumulation) the L input bits and the L weight bits. Moreover, the difference value $\{R_P - R_N\}$ varies nonlinearly with respect to the result of multiplying and accumulating (multiplication and accumulation) the L input bits and the L weight bits. Accordingly, the analog multiply accumulate circuit 32 can change the transient change in the difference voltage between the positive intermediate voltage $V_P$ and the negative intermediate voltage $V_N$ in accordance with the L weight bits $(w_1, ..., w_L)$. Therefore, the reservoir calculation device 10 can accurately represent the feature information included in the input signal x as a transient change of the output signal y.

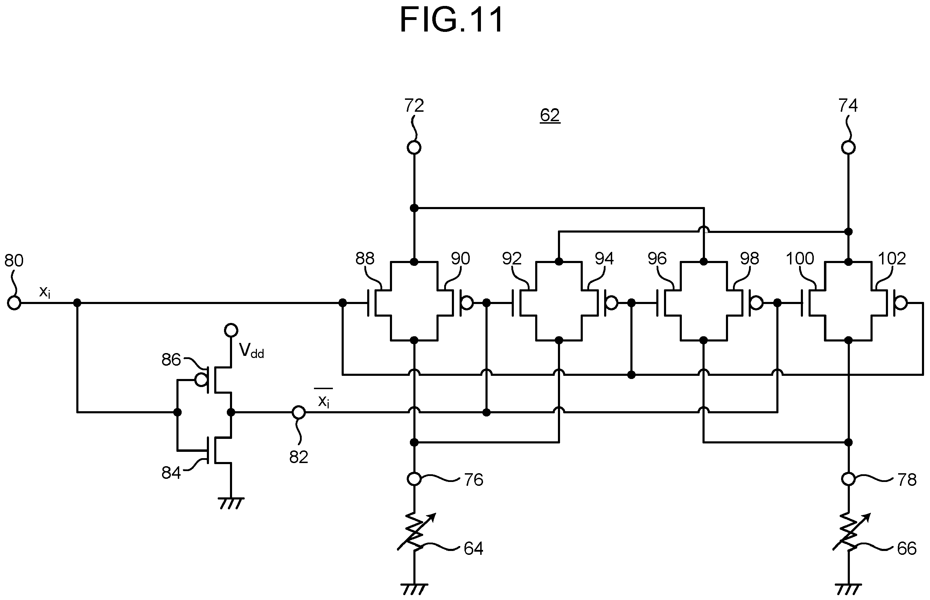

FIG. 11 is a diagram illustrating a configuration of the cross switch 62 of the i-th arithmetic circuit 46, along with the positive resistor 64 and the negative resistor 66.

The cross switch 62 of the i-th arithmetic circuit 46 includes a bit input terminal 80 and an inverted bit input terminal 82. The i-th input bit ($x_i$) is provided to the bit input terminal 80.

Moreover, the cross switch 62 of the i-th arithmetic circuit 46 includes a low-side nMOSFET 84, a high-side pMOSFET 86, a first nMOSFET 88, a first pMOSFET 90, a second nMOSFET 92, a second pMOSFET 94, a third nMOSFET 96, a third pMOSFET 98, a fourth nMOSFET 100, and a fourth pMOSFET 102.

The low-side nMOSFET 84 has a gate connected to the bit input terminal 80, a source connected to the reference potential, and a drain connected to the inverted bit input terminal 82. The high-side pMOSFET 86 has a gate connected to the bit input terminal 80, a source connected to the power supply potential (Vdd), and a drain connected to the inverted bit input terminal 82. The low-side nMOSFET 84 and the high-side pMOSFET 86 constitute an inverter and output, from the inverted bit input terminal 82, a value obtained by inverting the i-th input bit ($x_i$).

The first nMOSFET 88 has a gate connected to the bit input terminal 80, a drain connected to the positive input terminal 72, and a source connected to the positive output terminal 76. The first pMOSFET 90 has a gate connected to the inverted bit input terminal 82, a drain connected to the positive input terminal 72, and a source connected to the positive output terminal 76.

The second nMOSFET 92 has a gate connected to the inverted bit input terminal 82, a drain connected to the negative input terminal 74, and a source connected to the positive output terminal 76. The second pMOSFET 94 has a gate connected to the bit input terminal 80, a drain connected to the negative input terminal 74, and a source connected to the positive output terminal 76.

The third nMOSFET 96 has a gate connected to the bit input terminal 80, a drain connected to the positive input terminal 72, and a source connected to the negative output terminal 78. The third pMOSFET 98 has a gate connected to the inverted bit input terminal 82, a drain connected to the positive input terminal 72, and a source connected to the negative output terminal 78.

The fourth nMOSFET 100 has a gate connected to the inverted bit input terminal 82, a drain connected to the negative input terminal 74, and a source connected to the negative output terminal 78. The fourth pMOSFET 102 has a gate connected to the bit input terminal 80, a drain connected to the negative input terminal 74, and a source connected to the negative output terminal 78.

In such a cross switch 62, when the i-th input bit ($x_i$) is in the H logic (for example, +1), the first nMOSFET 88, the first pMOSFET 90, the fourth nMOSFET 100, and the fourth pMOSFET 102 are turned on, and the second nMOSFET 92, the second pMOSFET 94, the third nMOSFET 96, and the third pMOSFET 98 are turned off. Thus, the cross switch 62 can be in the straight connection state when the i-th input bit ($x_i$) is in the H logic (for example, +1).

In such a cross switch 62, when the i-th input bit ($x_i$) is in the L logic (for example, -1), the first nMOSFET 88, the first pMOSFET 90, the fourth nMOSFET 100, and the fourth pMOSFET 102 are turned off, and the second nMOSFET 92, the second pMOSFET 94, the third nMOSFET 96, and the third pMOSFET 98 are turned on. Thus, the cross switch 62 can be in the cross connection state when the i-th input bit ($x_i$) is in the L logic (for example, -1).

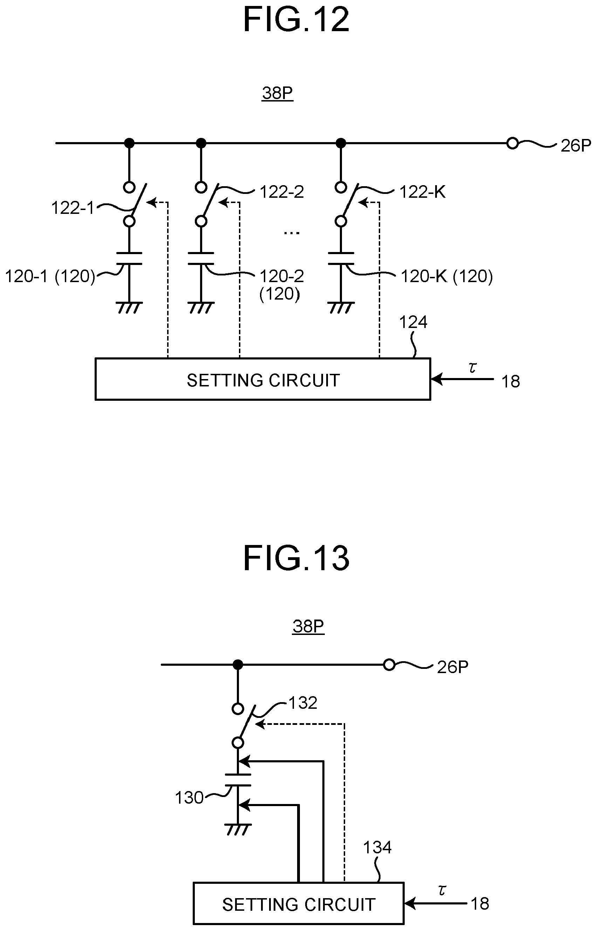

FIG. 12 is a diagram illustrating a first configuration example of the positive time constant circuit 38P. The positive time constant circuit 38P and the negative time constant circuit 38N have the same circuit configuration as each other. The configuration example of the positive time constant circuit 38P will be described.

The positive time constant circuit 38P includes a plurality of capacitors 120 (120-1, ..., 120-K), a plurality of change-over switches 122 (122-1, ..., 122-K), and a setting circuit 124.

The capacitors 120 constitute a variable capacitor. One of terminals of each capacitor 120 is connected to a reference potential (for example, ground).

The change-over switches 122 have a one-to-one correspondence with the capacitors 120. Each of the change-over switches 122 is provided between a terminal of a corresponding capacitor 120 out of the capacitors 120 that is not connected to the reference potential and the positive intermediate terminal 26P. Each of the change-over switches 122 short-circuits between the corresponding capacitor 120 and the positive intermediate terminal 26P in the on-state. In the off-state, each of the change-over switches 122 allows the state between the corresponding capacitor 120 and the positive intermediate terminal 26P to be in a non-conductive state.

The setting circuit 124 receives a time constant set value $\tau$ from the control circuit 18 and switches each of the change-over switches 122 to an on-state or an off-state in accordance with the received time constant set value $\tau$. The setting circuit 124 switches each of the change-over switches 122 to the on-state or the off-state such that the capacitance of the positive time constant circuit 38P is a value corresponding to the received time constant set value $\tau$.

The capacitance of the time constant circuit 30 is a total capacitance of capacitors 120 whose corresponding change-over switches 122 are in the on-state out of the capacitors 120. The time constant circuit 30 can change a time constant by that the capacitance is changed.

The capacitors 120 may have capacitances different from each other. For example, the positive time constant circuit 38P includes K capacitors 120 composed of a first capacitor 120-1 to a K-th capacitor 120-K (K is an integer of 2 or more) as the capacitors 120.

In this case, a capacitance of the first capacitor 120-1 is $C \times 2^0$(F), a capacitance of the second capacitor 120-2 is $C \times 2^1$(F), and a capacitance of the K-th capacitor 120-K is $C \times 2^{(K-1)}$(F). Note that, C is a constant. In such a case, a combined capacitance of the time constant circuit 30 is a value obtained by multiplying a binary digital representation by a constant C. Accordingly, the setting circuit 124 can easily control the capacitance of the time constant circuit 30 to a value corresponding to the time constant set value $\tau$ received from the control circuit 18.

FIG. 13 is a diagram illustrating a second configuration example of the positive time constant circuit 38P. The positive time constant circuit 38P may include an all-solid-state battery element 130, a change-over switch 132, and a setting circuit 134.

In the all-solid-state battery element 130, one electrode is connected to a reference potential. The change-over switch 132 is provided between an electrode that is not connected to the reference potential in the all-solid-state battery element 130 and the positive intermediate terminal 26P. The change-over switch 132 short-circuits between the all-solid-state battery element 130 and the positive intermediate terminal 26P in the on-state. In the off-state, the change-over switch 132 allows the state between the all-solid-state battery element 130 and the positive intermediate terminal 26P in a non-conductive state.

The all-solid-state battery element 130 includes a solid electrolyte and a pair of electrodes between which the solid electrolyte is sandwiched. Conduction of ions such as lithium ions occurs in the solid electrolyte when an electric field is applied. Each of the two electrode parts is a metallic compound including ions such as lithium ions in the lattice gap.

In such an all-solid-state battery element 130, lithium ions are transferred between the two electrode parts when a voltage is applied between the two electrode parts. A capacitance of the all-solid-state battery element 130 varies depending on a composition of the lithium ions in the two electrode parts. Such an all-solid-state battery element 130 has a capacitance larger than that of a capacitor because of a smaller volume than that of the capacitor.

The setting circuit 134 applies a voltage between the two electrodes of the all-solid-state battery element 130 to vary the capacitance of the all-solid-state battery element 130. The setting circuit 124 receives a time constant set value $\tau$ from the control circuit 18 and sets a capacitance of the all-solid-state battery element 130 to be the capacitance corresponding to the received time constant set value $\tau$. In addition, the setting circuit 124 allows the change-over switch 132 to be in the off-state when varying the capacitance with respect to the all-solid-state battery element 130, and allows the change-over switch 132 to be in the on-state when the reservoir calculation device 10 performs the arithmetic operation.

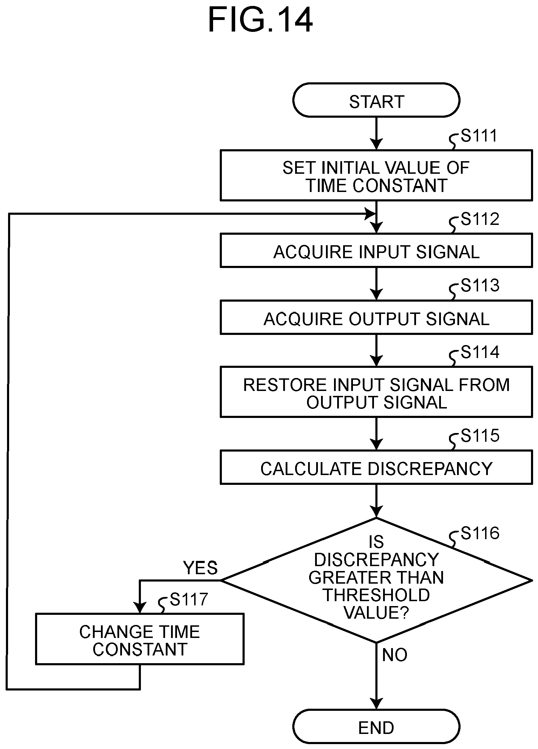

FIG. 14 is a flowchart illustrating an adjustment method for a time constant by the control circuit 18. The control circuit 18 adjusts time constants of the positive time constant circuit 38P and the negative time constant circuit 38N included in the time constant circuit 30 according to the flow illustrated in FIG. 14, prior to the arithmetic operation by the reservoir calculation device 10.

First, at S111, the control circuit 18 sets the time constant of the time constant circuit 30 as an initial value. For example, the control circuit 18 sets the time constant of the time constant circuit 30 as an initial value by providing an initial value of a predetermined time constant set value $\tau$ to the time constant circuit 30.

Next, at S112, the control circuit 18 acquires and stores an input signal x input to the reservoir calculation device 10. For example, the control circuit 18 acquires an input signal x for a predetermined time period as a sample, digitizes the input signal x, and stores waveform data of the input signal x. The input signal x is a signal that is acquired in the environment in which the reservoir calculation device 10 is applied.

Next, at S113, the control circuit 18 acquires and stores an output signal y for a predetermined time period that is output when the input signal x acquired at S112 is provided to the reservoir calculation device 10.

Next, at S114, the control circuit 18 generates a restored signal that restores the input signal x on the basis of the acquired output signal y. For example, the control circuit 18 generates a restored signal from the acquired output signal y by using an inverse transformation model of the reservoir calculation device 10. For example, the inverse transformation model is generated on the basis of an instruction signal or the like used during the training of the output weights set for the output circuit 16.

Next, at S115, the control circuit 18 compares the input signal x acquired at S112 with the restored signal by using a predetermined algorithm to calculate the discrepancy between the input signal x and the restored signal.

Next, at S116, the control circuit 18 determines whether the discrepancy is larger than a predetermined threshold value. In response to determining that the discrepancy is not larger than the threshold value (No at S116), the control circuit 18 ends this flow. In response to determining that the discrepancy is larger than the threshold value (Yes at S116), the control circuit 18 proceeds to S117.

At S117, the control circuit 18 changes the time constant of the time constant circuit 30 from the immediately previous value. For example, the control circuit 18 changes, on the basis of changes in the discrepancy so far, the time constant in a direction that causes the discrepancy to decrease. When the process at S117 ends, the control circuit 18 returns the process to S112. Next, the control circuit 18 repeats the process from S112 to S117 until the discrepancy decreases to the threshold value or smaller.

By executing such processing, the control circuit 18 can set the time constant in the time constant circuit 30 to output the output signal y, which can restore the input signal x. Accordingly, the control circuit 18 can set the time constant in the time constant circuit 30 such that the feature information included in the input signal x is appropriately represented by the output signal y.

As described above, the reservoir calculation device 10 according to the present embodiment is provided with the neuron circuit 22 generating the intermediate voltage V that undergoes the transient change corresponding to the set weight data and input data when the input data representing the level of the input signal x changes. Moreover, the neuron circuit 22 includes the time constant circuit 30 that is connected between the intermediate terminal 26, which outputs the intermediate voltage V, and the reference potential, and that can change a time constant. The reservoir calculation device 10 according to the present embodiment adjusts the time constant of the time constant circuit 30 to an appropriate value, thereby achieving the consistency between the change speed of the feature information included in the input signal x and the response characteristics of the neuron circuit 22. Accordingly, the reservoir calculation device 10 according to the present embodiment can generate the output signal y in which the feature information included in the input signal x is properly included.

While certain embodiments have been described, these embodiments have been presented by way of example only, and are not intended to limit the scope of the inventions. Indeed, the novel embodiments described herein may be embodied in a variety of other forms; moreover, various omissions, substitutions and changes in the form of the embodiments described herein may be made without departing from the spirit of the inventions. The accompanying claims and their equivalents are intended to cover such forms or modifications as would fall within the scope and spirit of the inventions.

Supplement

The above-described embodiments can be summarized in the following technical schemes.

(Technical scheme 1)

A reservoir calculation device (10) comprising:

an input circuit (12) configured to acquire an input signal and output input data corresponding to a level of the input signal;

a reservoir circuit (14) to which the input data is provided, the reservoir circuit (14) being configured to output intermediate signals, each undergoing a transient change when the input data changes; and

an output circuit (16) configured to output an output signal obtained by combining the intermediate signals, wherein

the reservoir circuit (14) includes intermediate circuits (20: 20-1, ..., 20-N),

each of the intermediate circuits (20) includes:

> a neuron circuit (22) for which weight data is set, the neuron circuit (22) being configured to acquire the input data and generate an intermediate voltage, the intermediate voltage undergoing a transient change corresponding to the weight data and the input data when the input data changes; and
>
> an intermediate output circuit (24) configured to output, as one of the intermediate signals, an intermediate signal representing a level of the intermediate voltage output from the neuron circuit (22), and

the neuron circuit (22) includes a time constant circuit (30) capable of changing a time constant, the time constant circuit (30) being connected between a reference potential and an intermediate terminal (26) outputting the intermediate voltage.

(Technical scheme 2)

The reservoir calculation device according to the technical scheme 1, wherein

the input data includes input bits, each representing a binary value,

the weight data includes weight bits, each representing a binary value,

each of the input bits corresponds to a different one of the weight bits,

the neuron circuit (22) further includes:

> a constant current source (42; 44); and
> arithmetic circuits (46: 46-1, ..., 46-L) having a one-to-one correspondence with the input bits, each of the arithmetic circuits (46) being connected between the intermediate terminal (26) and the reference potential,

each of the arithmetic circuits (46) includes a resistor (64; 66) and a switch (62), each of the arithmetic circuits (46) having a resistance value caused by switching the switch (62), the resistance value corresponding to a multiplication value obtained by multiplying a corresponding one of the input bits by a corresponding one of the weight bits, and

the arithmetic circuits (46-1, ..., 46-L) allow a current output from the constant current source to flow through the resistor.

(Technical scheme 3)

The reservoir calculation device according to the technical scheme 1, wherein

the input data includes input bits, each representing a binary value,

the weight data includes weight bits, each representing a binary value,

each of the input bits corresponds to a different one of the weight bits,

the neuron circuit (22) further includes:

> a positive current source (42) connected between a power supply potential and a positive intermediate terminal (26P) serving as the intermediate terminal on a positive side, the positive current source (42) allowing a constant current to flow;
>
> a negative current source (44) connected between the power supply potential and a negative intermediate terminal (26N) serving as the intermediate terminal on a negative side, the negative current source (44) allowing a constant current to flow; and
>
> arithmetic circuits (46: 46-1, ..., 46-L) have a one-to-one correspondence with the input bits, each of the arithmetic circuits (46) being connected between the intermediate terminal and the reference potential,

each of the arithmetic circuits (46) includes

> a cross switch (62), and
> a positive resistor (64) and a negative resistor (66),

a difference value between resistance of the positive resistor (64) and resistance of the negative resistor (66) is inverted to be positive or negative in accordance with a corresponding weight bit,

the cross switch (62) is configured to switch between a straight connection state and a reverse connection state in accordance with a corresponding input bit,

the cross switch (62) is configured to, in the straight connection state,

> connect the positive resistor (64) between the reference potential and the positive intermediate terminal (26P), and
>
> connect the negative resistor (66) between the reference potential and the negative intermediate terminal (26N), and

the cross switch (62) is configured to, in the reverse connection state,

connect the positive resistor (64) between the reference potential and the negative intermediate terminal (26N), and
connect the negative resistor (66) between the reference potential and the positive intermediate terminal (26P).

(Technical scheme 4)

The reservoir calculation device according to the technical scheme 3, wherein

the positive intermediate terminal (26P) outputs a positive intermediate voltage,
the negative intermediate terminal (26N) outputs a negative intermediate voltage, and
the neuron circuit (22) further includes a selector (36) configured to
select either the positive intermediate voltage or the negative intermediate voltage in accordance with one of the weight bits, and
output the selected voltage as the intermediate voltage.

(Technical scheme 5)

The reservoir calculation device according to any one of the technical schemes 2 to 4, wherein the input bits include positive bits and negative bits, the positive bits expressing an absolute value of the level of the input signal by a number of first values when the level is positive, each of the first value being either one of binary values, the negative bits expressing an absolute value of the level of the input signal by a number of the first values when the level is negative.

(Technical scheme 6)

The reservoir calculation device according to any one of the technical schemes 1 to 5, wherein the output circuit (16) is configured to output the output signal obtained by multiplying and accumulating the intermediate signals and output weights set for advance.

(Technical scheme 7)

The reservoir calculation device according to any one of the technical schemes 1 to 6, further comprising a control circuit (18) configured to control the time constant circuit (30) to change the time constant.

(Technical scheme 8)

The reservoir calculation device according to the technical scheme 7, wherein

the time constant circuit (30) is configured to allow a capacitance of the time constant circuit (30) to be changed, and
the control circuit (18) is configured to change the capacitance of the time constant circuit.

(Technical scheme 9)

The reservoir calculation device according to the technical scheme 8, wherein the time constant circuit (30) includes a variable capacitor.

(Technical scheme 10)

The reservoir calculation device according to the technical scheme 8, wherein

the time constant circuit (30) includes an all-solid-state battery element (130), and
the all-solid-state battery element includes

a solid electrolyte, and
a pair of electrodes between which the solid electrolyte is sandwiched, the electrodes including ions.

(Technical scheme 11)

The reservoir calculation device according to any one of the technical schemes 7 to 10, wherein the control circuit (18) is configured to:

acquire the input signal;
acquire the output signal being output in response to the input signal provided to the input circuit (12);
generate a restored signal by restoring the input signal on the basis of the output signal; and
adjust the time constant in the time constant circuit on the basis of a result of comparing the input signal and the restored signal.

(Technical scheme 12)

An adjustment method of adjusting a reservoir calculation device (10), the reservoir calculation device (10) including:

an input circuit (12) configured to acquire an input signal and output input data corresponding to a level of the input signal;
a reservoir circuit (14) to which the input data is provided, the reservoir circuit (14) being configured to output intermediate signals, each undergoing a transient change when the input data changes; and
an output circuit (16) configured to output an output signal obtained by combining the intermediate signals, wherein
the reservoir circuit (14) includes intermediate circuits (20: 20-1, ..., 20-N),
each of the intermediate circuits (20) includes:

a neuron circuit (22) for which weight data is set, the neuron circuit (22) being configured to acquire the input data and generate an intermediate voltage, the intermediate voltage undergoing a transient change corresponding to the weight data and the input data when the input data changes; and
an intermediate output circuit (24) configured to output, as one of the intermediate signals, an intermediate signal representing a level of the intermediate voltage output from the neuron circuit (22), and

the neuron circuit (22) includes a time constant circuit (30) capable of changing a time constant, the time constant circuit (30) being connected between a reference potential and an intermediate terminal (26) outputting the intermediate voltage,
the adjustment method comprising:

acquiring the input signal;
acquiring the output signal being output in response to the input signal provided to the input circuit (12);
generating a restored signal by restoring the input signal on the basis of the output signal; and
adjusting the time constant in the time constant circuit on the basis of a result of comparing the input signal and the restored signal.

**Claims**

1. A reservoir calculation device (10) comprising:

an input circuit (12) configured to acquire an input signal and output input data corresponding to a level of the input signal;
a reservoir circuit (14) to which the input data is provided, the reservoir circuit (14) being configured to output intermediate signals, each undergoing a transient change when the input data changes; and
an output circuit (16) configured to output an output signal obtained by combining the intermediate signals, wherein
the reservoir circuit (14) includes intermediate circuits (20: 20-1, ..., 20-N),
each of the intermediate circuits (20) includes:

a neuron circuit (22) for which weight data is set, the neuron circuit (22) being configured to acquire the input data and generate an intermediate voltage, the intermediate voltage undergoing a transient change corresponding to the weight data and the input data when the input data changes; and
an intermediate output circuit (24) configured to output, as one of the intermediate signals, an intermediate signal representing a level of the intermediate voltage output from the neuron circuit (22), and

the neuron circuit (22) includes a time constant circuit (30) capable of changing a time constant, the time constant circuit (30) being connected between a reference potential and an intermediate terminal (26) outputting the intermediate voltage.

2. The reservoir calculation device according to claim 1, wherein

the input data includes input bits, each representing a binary value,
the weight data includes weight bits, each representing a binary value,
each of the input bits corresponds to a different one of the weight bits,
the neuron circuit (22) further includes:

a constant current source (42; 44); and
arithmetic circuits (46: 46-1, ..., 46-L) having a one-to-one correspondence with the input bits, each of the arithmetic circuits (46) being connected between the intermediate terminal (26) and the reference potential,

each of the arithmetic circuits (46) includes a resistor (64; 66) and a switch (62), each of the arithmetic circuits (46) having a resistance value caused by switching the switch (62), the resistance value corresponding to a multiplication value obtained by multiplying a corresponding one of the input bits by a corresponding one of the weight bits, and
the arithmetic circuits (46-1, ..., 46-L) allow a current output from the constant current source to flow through the resistor.

3. The reservoir calculation device according to claim 1, wherein

the input data includes input bits, each representing a binary value,
the weight data includes weight bits, each representing a binary value,
each of the input bits corresponds to a different one of the weight bits,
the neuron circuit (22) further includes:

a positive current source (42) connected between a power supply potential and a positive intermediate terminal (26P) serving as the intermediate terminal on a positive side, the positive current source (42) allowing a constant current to flow; a negative current source (44) connected between the power supply potential and a negative intermediate terminal (26N) serving as the intermediate terminal on a negative side, the negative current source (44) allowing a constant current to flow; and arithmetic circuits (46: 46-1, ..., 46-L) have a one-to-one correspondence with the input bits, each of the arithmetic circuits (46) being connected between the intermediate terminal and the reference potential,

each of the arithmetic circuits (46) includes

a cross switch (62), and
a positive resistor (64) and a negative resistor (66),

a difference value between resistance of the positive resistor (64) and resistance of the negative resistor (66) is inverted to be positive or negative in accordance with a corresponding weight bit,
the cross switch (62) is configured to switch between a straight connection state and a reverse connection state in accordance with a corresponding input bit,
the cross switch (62) is configured to, in the straight connection state,

connect the positive resistor (64) between the reference potential and the positive intermediate terminal (26P), and
connect the negative resistor (66) between the reference potential and the negative intermediate terminal (26N), and

the cross switch (62) is configured to, in the reverse connection state,

connect the positive resistor (64) between the reference potential and the negative intermediate terminal (26N), and
connect the negative resistor (66) between the reference potential and the positive intermediate terminal (26P).

4.  The reservoir calculation device according to claim 3, wherein

the positive intermediate terminal (26P) outputs a positive intermediate voltage,
the negative intermediate terminal (26N) outputs a negative intermediate voltage, and

the neuron circuit (22) further includes a selector (36) configured to

select either the positive intermediate voltage or the negative intermediate voltage in accordance with one of the weight bits, and output the selected voltage as the intermediate voltage.

5.  The reservoir calculation device according to claim 2, wherein the input bits include positive bits and negative bits, the positive bits expressing an absolute value of the level of the input signal by a number of first values when the level is positive, each of the first value being either one of binary values, the negative bits expressing an absolute value of the level of the input signal by a number of the first values when the level is negative.

6.  The reservoir calculation device according to claim 1, wherein the output circuit (16) is configured to output the output signal obtained by multiplying and accumulating the intermediate signals and output weights set for advance.

7.  The reservoir calculation device according to claim 1, further comprising a control circuit (18) configured to control the time constant circuit (30) to change the time constant.

8.  The reservoir calculation device according to claim 7, wherein

the time constant circuit (30) is configured to allow a capacitance of the time constant circuit (30) to be changed, and
the control circuit (18) is configured to change the capacitance of the time constant circuit.

9.  The reservoir calculation device according to claim 8, wherein the time constant circuit (30) includes a variable capacitor.

10.  The reservoir calculation device according to claim 8, wherein

the time constant circuit (30) includes an all-solid-state battery element (130), and
the all-solid-state battery element includes

a solid electrolyte, and
a pair of electrodes between which the solid electrolyte is sandwiched, the electrodes including ions.

11.  The reservoir calculation device according to claim 7, wherein the control circuit (18) is configured to:

acquire the input signal;

acquire the output signal being output in response to the input signal provided to the input circuit (12);

generate a restored signal by restoring the input signal on the basis of the output signal; and

adjust the time constant in the time constant circuit on the basis of a result of comparing the input signal and the restored signal.

12. An adjustment method of adjusting a reservoir calculation device (10), the reservoir calculation device (10) including:

an input circuit (12) configured to acquire an input signal and output input data corresponding to a level of the input signal;

a reservoir circuit (14) to which the input data is provided, the reservoir circuit (14) being configured to output intermediate signals, each undergoing a transient change when the input data changes; and

an output circuit (16) configured to output an output signal obtained by combining the intermediate signals, wherein

the reservoir circuit (14) includes intermediate circuits (20: 20-1, ..., 20-N),

each of the intermediate circuits (20) includes:

a neuron circuit (22) for which weight data is set, the neuron circuit (22) being configured to acquire the input data and generate an intermediate voltage, the intermediate voltage undergoing a transient change corresponding to the weight data and the input data when the input data changes; and

an intermediate output circuit (24) configured to output, as one of the intermediate signals, an intermediate signal representing a level of the intermediate voltage output from the neuron circuit (22), and

the neuron circuit (22) includes a time constant circuit (30) capable of changing a time constant, the time constant circuit (30) being connected between a reference potential and an intermediate terminal (26) outputting the intermediate voltage,

the adjustment method comprising:

acquiring the input signal;

acquiring the output signal being output in response to the input signal provided to the input circuit (12);

generating a restored signal by restoring the input signal on the basis of the output signal; and

adjusting the time constant in the time constant circuit on the basis of a result of comparing the input signal and the restored signal.

# FIG.1

INPUT SIGNAL
(TIME-SERIES)

RESERVOIR
CALCULATION DEVICE

10

OUTPUT SIGNAL
(TIME-SERIES)

# FIG.2

FIG.3

# FIG.4

# FIG.5

# FIG.6

$$w_i \cdot x_i = R_{P\_i} - R_{N\_i}$$
$$= R_1 - R_2 \geq 0$$
$$= +1$$

# FIG.7

$$w_i \cdot x_i = R_{P\_i} - R_{N\_i}$$
$$= R_2 - R_1 < 0$$
$$= -1$$

# FIG.8

$$w_i \cdot x_i = R_{P\_i} - R_{N\_i}$$
$$= R_2 - R_1 < 0$$
$$= -1$$

# FIG.9

$$w_i \cdot x_i = R_{P\_i} - R_{N\_i}$$
$$= R_1 - R_2 \geq 0$$
$$= +1$$

# FIG.10

$V_{DD}$

42

$\downarrow$ I

32

$R_{P\_1}$  $R_{P\_2}$  ...  $R_{P\_L}$

26P

$V_d = V_P - V_N$

$V_{DD}$

44

$\downarrow$ I

26N

$R_{N\_1}$  $R_{N\_2}$  ...  $R_{N\_L}$

# FIG.11

EP 4 361 886 A1

# FIG.12

38P

26P

122-1 122-2 122-K

...

120-1 (120) 120-2 (120) 120-K (120)

124

SETTING CIRCUIT

$\tau$ 18

# FIG.13

38P

26P

132

130

134

SETTING CIRCUIT

$\tau$ 18

# FIG.14

```
                    ┌─────────────┐
                    │    START    │
                    └──────┬──────┘
                           │         ⌐S111
                    ┌──────▼──────────────┐
              ┌────►│ SET INITIAL VALUE OF│
              │     │    TIME CONSTANT    │
              │     └──────┬──────────────┘
              │            │         ⌐S112
              │     ┌──────▼──────────────┐
              │     │ ACQUIRE INPUT SIGNAL│
              │     └──────┬──────────────┘
              │            │         ⌐S113
              │     ┌──────▼──────────────┐
              │     │ ACQUIRE OUTPUT SIGNAL│
              │     └──────┬──────────────┘
              │            │         ⌐S114
              │     ┌──────▼──────────────┐
              │     │RESTORE INPUT SIGNAL │
              │     │  FROM OUTPUT SIGNAL │
              │     └──────┬──────────────┘
              │            │         ⌐S115
              │     ┌──────▼──────────────┐
              │     │ CALCULATE DISCREPANCY│
              │     └──────┬──────────────┘
              │            │
              │          ◄─┴─►    ⌐S116
              │       IS DISCREPANCY
              │  YES  GREATER THAN
              │ ◄──── THRESHOLD VALUE?
              │  ⌐S117       │ NO
       ┌──────▼──────┐       │
       │ CHANGE TIME │   ┌───▼───┐
       │  CONSTANT   │   │  END  │
       └─────────────┘   └───────┘
```

Europäisches
Patentamt
European
Patent Office
Office européen
des brevets

# EUROPEAN SEARCH REPORT

Application Number

EP 23 19 4084

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARUKAME TAKAO ET AL: "Dynamic Firing on Static Analog/Digital Neuron Circuits with Resistive Synapses for Time-Series Neural Network", 2019 IEEE INTERNATIONAL SYMPOSIUM ON CIRCUITS AND SYSTEMS (ISCAS), IEEE, 12 October 2020 (2020-10-12), pages 1-5, XP033932015, ISSN: 2158-1525, DOI: 10.1109/ISCAS45731.2020.9180642 ISBN: 978-1-7281-3320-1 [retrieved on 2020-08-28] * page 1 - page 4 * | 1-12 | INV. G06N3/044 G06N3/049 G06N3/065 G06F7/00 |

-----

| | | | TECHNICAL FIELDS SEARCHED (IPC) |
|---|---|---|---|
| | | | G06N G06F |

The present search report has been drawn up for all claims

| Place of search | Date of completion of the search | Examiner |
|---|---|---|
| The Hague | 6 February 2024 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)